# EUROPÄISCHE PATENTANMELDUNG

(11) **EP 2 103 815 A2**
(43) Veröffentlichungstag der Anmeldung: **23.09.2009**
(21) Anmeldenummer: 09155153.1
(22) Anmeldetag: 13.03.2009
(51) Int. Cl.: F15B 15/14

(54) **Hydraulikzylinderanordnung und Kippmuldenfahrzeug mit einer Hydraulikzylinderanordnung**

(30) Priorität: 18.03.2008 DE 102008014770
(71) Anmelder: TSE Trailer-System-Engineering GmbH & Co. KG, 72365 Ratshausen (DE)
(72) Erfinder: Seifritz, Harald, 72364 Obernheim (DE)
(74) Vertreter: Weber, Gerhard

(57) **Zusammenfassung**

Für eine Hydraulikzylinderanordnung, insbesondere zur Verwendung in einem Kippmuldenfahrzeug, wird vorgeschlagen, bei der Kolbenstangenanordnung die Gleitfläche, welche an einer Fluiddichtung und einem Abstreifer entlang gleitet, in einen ersten Abschnitt (GF1) und einen zweiten Abschnitt (GF2) zu unterteilen und die Oberflächenbeschaffenheit der beiden Abschnitte unterschiedlich zu gestalten, insbesondere die Oberfläche im zweiten Abschnitt für einen erhöhte Verschleißfestigkeit zu härten und vorteilhafterweise auch korrosionsschützend zu behandeln und die Oberfläche im ersten Abschnitt nicht einer thermischen Nachbehandlung zur Erhöhung der Verschleißfestigkeit zu unterziehen.

## Beschreibung

Hydraulikzylinderanordnung und Kippmuldenfahrzeug mit einer Hydraulikzylinderanordnung.

Die Erfindung betrifft eine Hydraulikzylinderanordnung nach dem Oberbegriff des Patentanspruchs 1 und ein Kippmuldenfahrzeug mit einer Hydraulikzylinderanordnung.

Bei gebräuchlichen Hydraulikzylinderanordnungen ist eine Kolbenstange in einem rohrförmigen Zylinder relativ zu diesem unter Einwirkung eines unter hohem Druck in einen Fluidraum des Zylinders einleitbaren Hydraulikfluids verschiebbar geführt, wobei der Fluidraum durch eine Fluiddichtung zwischen Innenwand des Zylinderrohrs und Außenfläche der Kolbenstange abgedichtet ist. Die Fluiddichtung, die auch als Stangendichtung bezeichnet wird, ist typischerweise in einer Nut in der Innenwand des Zylinderrohrs axial festgelegt und die Außenfläche der Kolbenstange bildet eine Gleitfläche für den Dichtring der Fluiddichtung. Um den Verschleiß der Fluiddichtung durch auf der Außenfläche der Kolbenstange aus der Umgebung sich anlagernde Partikel gering zu halten, ist von der Fluiddichtung axial beabstandet ein ringförmiger Abstreifer angeordnet, welcher an der Gleitfläche anliegt. Axial zwischen Abstreifer und Fluiddichtung liegen typischerweise Stützelemente, welche die Kolbenstange radial gegen die Innenwand des Zylinderrohrs abstützen. Die Kolbenstange kann auch ihrerseits rohrförmig ausgebildet sein. Bei mehrstufigen Hydraulikzylindern sind mehrere Zylinderrohre ineinander geführt.

Derartige Hydraulikzylinderanordnungen sind beispielsweise eingesetzt in Kippmuldenfahrzeugen und dabei als Hubeinrichtungen zwischen einem Fahrzeugchassis und einer um eine horizontale Schwenkachse schwenkbaren Kippmulde angeordnet. Solche Kippmuldenfahrzeuge sind häufig in stark schmutzbelasteter Umgebung im Einsatz, so dass der Funktion des Abstreifers wesentliche Bedeutung zukommt. Im Fahrbetrieb solcher Kippmuldenfahrzeuge ist die Kolbenstange typischerweise nicht vollständig in das Zylinderrohr eingeschoben und die Kippmulde ist in von der Hydraulikzylinderanordnung getrennten Auflagern auf dem Fahrzeugchassis abgestützt. Die Gleitfläche ist durch den Abstreifer besonders beansprucht, weshalb die die Gleitfläche bildende Außenfläche der Kolbenstange in der Regel gehärtet oder chromatiert wird.

In der DE 202 07 383 ist eine Hydraulikzylinderanordnugn für eine Kippbrücke eines Kippfahrzeugs beschrieben, wobei ein Gelenkkörper am freien Ende der Kolbenstange längsverschiebbar gehalten ist. Vibrationen im Fahrbetrieb führen zu Relativbewegungen von Gelenkkörper und Kolbenstange, so dass Relativbewegungen zwischen Kolbenstange und Zylinderrohr im Fahrbetrieb vermieden werden.

Der Erfindung liegt die Aufgabe zugrunde, eine vorteilhafte Hydraulikzylinderanordnung und ein Kippmuldenfahrzeug mit einer solchen Hydraulikzylinderanordnung anzugeben.

Erfindungsgemäße Lösungen sind in den unabhängigen Ansprüchen beschrieben. Die Abhängigen Ansprüche enthalten vorteilhafte Ausgestaltungen und Weiterbildungen der Erfindung.

Die axiale Unterteilung der Gleitfläche in einen durch eine Außenfläche der Kolbenstange gebildeten ersten Abschnitt und einen durch eine Außenfläche eines auf der Kolbenstange befestigten, nachfolgend als Anbindungskörper bezeichneten Körpers gebildeten zweiten Abschnitt ermöglicht vorteilhafterweise eine Erhöhung der Verschleißfestigkeit des insbesondere bei Schwingungen im Fahrbetrieb eines Kippmuldenfahrzeugs durch den Abstreifer besonders belasteten axialen Bereichs der Gleitfläche, ohne dass die gesamte Gleitfläche der vollständigen Kolbenstange durch Nachbehandlung verschleißfrei gemacht werden muss. Der Anbindungskörper dient zur Anbindung des über das Zylinderrohr hinaus ragenden freien Endes der Kolbenstange an ein Objekt, insbesondere eine Kippmulde eines Kippmuldenfahrzeugs. Durch das wesentlich geringere Volumen des Anbindungskörpers gegenüber der Kolbenstange kann eine erhebliche Kostenreduzierung einer solchen Oberflächenbehandlung, welche insbesondere durch Nitrieren der Außenfläche des Anbindungskörpers erfolgen kann, erreicht werden. Der erste Abschnitt der Gleitfläche, welcher durch die Außenfläche der Kolbenstange gebildet ist, kann in seiner Oberflächenbeschaffenheit primär auf die Abdichtung des Fluidraums durch die ringförmige Fluiddichtung abgestimmt werden. Abstreifer und Fluiddichtung können in gebräuchlicher Weise aus Kunststoff, z. B. Polyurethan bestehen, wobei vorteilhafterweise Abstreifer und Fluiddichtung entsprechend ihrer unterschiedlichen Funktion aus verschiedenen Kunststoffen bestehen können.

Die den zweiten Abschnitt der Gleitfläche bildende Außenfläche kann insbesondere durch eine Oberflächenbehandlung bei erhöhter Temperatur, vorzugsweise Nitrieren, gehärtet sein. Vorteilhafterweise ist der zweite Abschnitt der Gleitfläche auch korrosionsschützend behandelt, was insbesondere auch gemeinsam mit der Oberflächenhärtung erfolgen kann.

Die axiale Trennstelle zwischen erstem und zweitem Abschnitt der Gleitfläche liegt in einer Ruhestellung der Hydraulikzylinderanordnung mit im wesentlichen vollständig in das Zylinderrohr eingefahrener Kolbenstange axial zwischen dem Abstreifer und der Fluiddichtung, so dass eine solche Trennstelle beim Wechsel zwischen der Ruhestellung der Hydraulikzylinderanordnung und einer Arbeitsstellung mit unter Einwirkung des Hydraulikfluids weiter aus dem Zylinderrohr verschobener Kolbenstange nur an dem Abstreifer vorbei gleitet, die Fluiddichtung hingegen immer nur auf dem ersten Abschnitt der Gleitfläche gleitet. Eine mechanische Belastung des Abstreifers beim Gleiten über die Trennstelle ist in der Regel durch die bereits aus seiner Grundfunktion mechanisch robuste Ausgestaltung unproblematisch. Die Trennstelle kann bei Bedarf mit geringem Aufwand mechanisch nachbearbeitet werden.

Die axiale Länge des ersten Abschnitts der Gleitfläche ist wesentlich größer als die Länge des zweiten Abschnitts, welche vorteilhafterweise weniger als 20 %, vorzugsweise weniger als 10 % der Länge des ersten Abschnitts beträgt. Die axiale Länge des zweiten Abschnitts beträgt vorteilhafterweise wenigstens 50 %, insbesondere wenigstens 75 % des axialen Abstands von Abstreifer und Fluiddichtung. Bei einem Kippmuldenfahrzeug ist vorteilhafterweise die Kolbenstange in der Ruhestellung der Hydraulikzylinderanordnung nicht bis zum Boden des Fluidraums eingeschoben und durch die Abstützung der Kippmulde gegen das Fahrzeugchassis an Auflagern bestimmt. Zum Ausgleich von Variationen der axialen Position der Kolbenstange in der Ruhestellung beträgt der axiale Abstand zwischen Abstreifer und Fluiddichtung vorteilhafterweise wenigstens 1 cm.

Zusätzlich zu dem im Ruhezustand der Anordnung an dem zweiten Abschnitt der Gleitfläche anliegenden Abstreifer kann, je nach Anforderungen im Einzelfall, auch ein weiterer Abstreifer zwischen dem erstgenannten Abstreifer und der Fluiddichtung angeordnet sein, welcher dann nur auf dem ersten Abschnitt der Gleitfläche gleitet bzw. anliegt.

Der Anbindungskörper ist vorteilhafterweise zerstörungsfrei lösbar mit der Kolbenstange verbunden, so dass jedes der beiden Bauteile einzeln austauschbar ist. Der Anbindungskörper ist vorteilhafterweise mit der Kolbenstange verschraubt, insbesondere über eine axiale Schraubverbindung, wobei vorteilhafterweise zusätzliche Zentrierstrukturen zur radial präzisen relativen Ausrichtung von Kolbenstange und Anbindungskörper vorgesehen sein können. Vorzugweise ist die Kolbenstange als Hohlkörper, insbesondere als Rohr ausgebildet. Ein Innengewinde als Teile einer Schraubverbindung kann dabei vorteilhafterweise in die Rohrinnenwand eingeschnitten sein.

Der Anbindungskörper kann vorteilhafterweise einen Teil eines Schwenkgelenks, z. B. eine Lagerbuchse, enthalten, über welche die Kolbenstange Hydraulikzylinderanordnung an das Chassis oder insbesondere die Kippmulde angebunden ist.

Die Erfindung ist nachfolgend anhand bevorzugter Ausführungsbeispiele unter Bezugnahme auf die Abbildungen noch eingehend veranschaulicht. Dabei zeigt:
- Fig. 1: einen Ausschnitt einer Hydraulikzylinderanordnung bei voll- ständig eingeschobener Kolbenstange,
- Fig. 2: Die Anordnung nach Fig. 1 mit teilweise ausgeschobener Kol- benstange,
- Fig. 3: ein Kippmuldenfahrzeug mit maximal angehobener Kippmulde,
- Fig. 4: das Kippmuldenfahrzeug nach Fig. 3 mit abgesenkter Kippmulde.

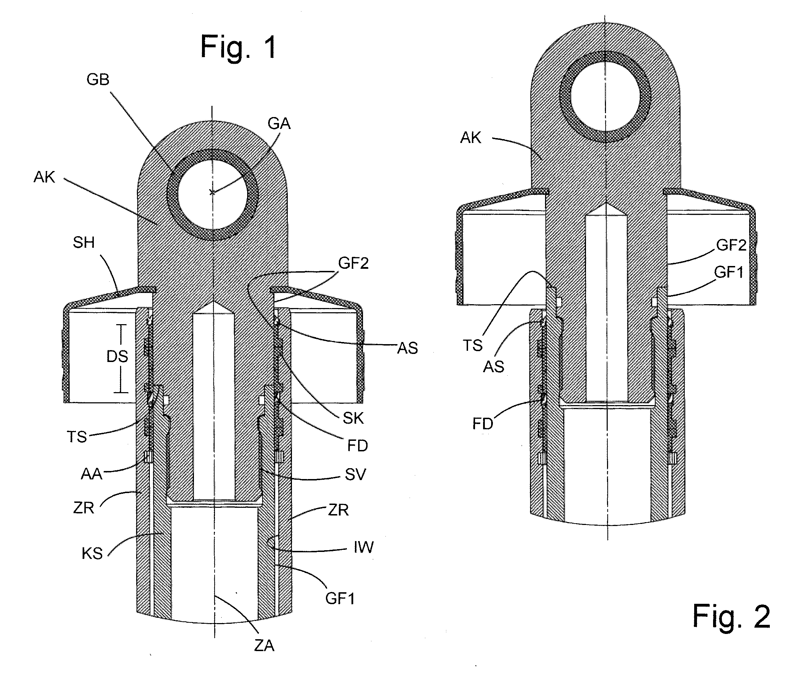

In Fig. 1 ist ein Ausschnitt aus einer Hydraulikzylinderanordnung mit einem Zylinderrohr ZR und einer Kolbenstange KS dargestellt, bei welcher die Kolbenstange maximal in das Zylinderrohr ZR eingeschoben ist. Das in der Skizze dargestellte Ende des Zylinderrohrs ZR bildet den Zylinderkopf.

Die Kolbenstange KS ist vorteilhafterweise durch einen Hohlkörper, insbesondere ein Rohr gebildet, wodurch bei hoher Stabilität ein gegenüber einer massiven Kolbenstange geringes Gewicht erzielt wird. Über eine Schraubgewindeverbindung SV ist ein Anbindungskörper AK in Richtung der Zylinderachse ZA in die Kolbenstange KS eingeschraubt. Die Kolbenstange KS besitzt eine zylindrische Außenfläche, vorzugsweise eine um die Zylinderachse ZA des Zylinderrohrs ZR rotationssymmetrische Kreiszylinderfläche, welche einen ersten Abschnitt GF1 einer Gleitfläche bildet. Der erste Abschnitt GF1 der Gleitfläche ist in bezüglich der Zylinderachse ZA axialer Richtung fortgesetzt durch einen zweiten Abschnitt GF2 der Gleitfläche, welcher durch eine Mantelfläche des Anbindungskörper AK gebildet ist. Der erste Abschnitt GF1 und der zweite Abschnitt GF2 gehen in axialer Richtung an einer Trennstelle TS ineinander über. Der erste Abschnitt GF1 und der zweite Abschnitt GF2 fluchten in axialer Richtung miteinander und bilden eine einheitliche zylindrische Gleitfläche. Die Gleitfläche mit erstem Abschnitt GF1 und zweitem Abschnitt GF2 ist in bezüglich der Zylinderachse ZA radialer Richtung von der Innenwand IW des Zylinderrohr ZR um ein geringes Maß beabstandet.

In an sich bekannter Weise zeigt die Innenwand IW im Bereich des Endes des Zylinderrohres ZR mehrere, insbesondere als kreisförmige Nuten ausgebildete Vertiefungen, in welcher verschiedene Funktionselemente aufgenommen sind. Ein Anschlagring AA begrenzt die Ausschiebung der Kolbenstange KS in axialer Richtung aus dem Zylinderrohr ZR in Verbindung mit Gegenanschlagselementen am entgegen gesetzten, in Fig. 1 nicht erkennbaren Ende der Kolbenstange. Stützkörper SK bewirken eine radiale Abstützung der Kolbenstange in dem Zylinderrohr ZR. Eine Fluiddichtung FD dichtet den Fluidraum der Hydraulikzylinderanordnung, welcher auch den Spalt zwischen Kolbenstange KS und Innenwand IW des Zylinderrohrs ZR beinhaltet, ab und verhindert das Austreten von Hydraulikflüssigkeit. Ein Abstreifer AS hat die Funktion, Ablagerungen, insbesondere Partikel, welche sich bei ausgefahrener Kolbenstange aus der Umgebung an die Außenfläche der Kolbenstange anlagern, beim axialen Zurückfahren der Kolbenstange in das Zylinderrohr von der Gleitfläche abzustreifen und dadurch zu vermeiden, dass solche Partikel bis zu der Fluiddichtung FD mitgeschleppt werden und diese beschädigen können. Die Gleitfläche als Außenfläche der Kolbenstange gleitet bei axialer Verschiebung der Kolbenstange relativ zu dem Zylinderrohr an den Stützkörpern SK, der Fluiddichtung FD und dem Abstreifer AS entlang. Gegenüber dem Begrenzungsanschlag AA kann die Kolbenstange KS einen geringen Spalt aufweisen.

Der Anbindungskörper AK weist in axialer Richtung von dem Rohrende beabstandet eine Schutzhaube SH auf, welche in einer Ruhestellung der Hydraulikzylinderanordnung das obere Ende des Zylinderrohrs ZR und bei einer bevorzugten mehrstufigen Anordnung auch die Enden weiterer, das Zylinderrohr ZR umgebender Rohre abdeckt und gegen fallenden Schmutz schützt. Die weiteren Rohre einer mehrstufigen Hydraulikzylinderanordnung sind der Übersichtlichkeit halber in Fig. 1 nicht mit eingezeichnet. Der Anbindungskörper AK zeigt im skizzierten Beispiel für die Anbindung an ein Objekt, insbesondere an eine Kippmulde eines Kippmuldenfahrzeugs ein Gelenkauge mit einer Gelenkbuchse GB um eine Gelenkachse GA. Im montierten Zustand wirken korrespondierende Gelenkteile, welche z. B. mit der genannten Kippmulde verbunden sind, mit der Gelenkbuchse GB unter Ausbildung eines Schwenkgelenks zusammen. Die Anbindung kann im Detail auf andere Weise, insbesondere unter Ausbildung einer anderen Gelenkanordnung von dem skizzierten Beispiel abweichen.

In Fig. 1 ist die Kolbenstange KS mit dem Anbindungskörper in einer maximal in das Zylinderrohr ZR eingeschobenen Position dargestellt, bei welcher beispielsweise die Kolbenstange KS mit ihrem dem Anbindungskörper AK entgegen gesetzten Ende an einem Anschlag, beispielsweise einer den Fluidraum der Hydraulikzylinderanordnung begrenzenden Bodenplatte oder einem anderen Anschlag abgestützt sein kann. Die Trennstelle TS zwischen dem ersten Abschnitt GF1 und dem zweiten Abschnitt GF2 der Gleitfläche liegt in axialer Richtung zwischen dem Abstreifer AS und der Fluiddichtung FD, vorteilhafterweise nahe bei der Fluiddichtung FD.

Im bevorzugten Einsatzfall bei einem Kippmuldenfahrzeug ist die Ruhestellung der Kolbenstange KS bei abgesenkter Kippmulde typischerweise gegenüber der in Fig. 1 skizzierten Stellung weiter aus dem Zylinderrohr ZR in axialer Richtung nach außen verlagert, wobei aber die Trennstelle TS in axialer Richtung zwischen dem Abstreifer AS und der Fluiddichtung FD liegt. Der axiale Abstand DS zwischen Fluiddichtung FD und Abstreifer AS ist auf den Einsatz in einem Kippmuldenfahrzeug so abgestimmt, dass die Toleranzen der Position der abgesenkten Kippmulde bzw. der Anbindung der Hydraulikzylinderanordnung an die Kippmulde über den Anbindungskörper geringer sind als der Abstand DS.

Bei abgesenkter Kippmulde eines Kippmuldenfahrzeugs und im wesentlichen überdruckfreiem Fluidraum sind Zwischenrohre einer mehrstufigen Hydraulikzylinderanordnung bis auf ihren unteren Anschlag abgesenkt, die Kolbenstange KS liegt aber nicht an einem das Einschieben der Kolbenstange in das Zylinderrohr ZR begrenzenden Anschlag an, sondern ist gegenüber einer solchen Anschlagposition in Ausschieberichtung versetzt. Die Kolbenstange KS ist dadurch in dem Zylinderrohr ZR in axialer Richtung schwimmend geführt. Die Kippmulde ist an von der Hydraulikzylinderanordnung getrennten Auflagern des Chassis abgestützt und im Fahrbetrieb auftretende Schwingungen der Kippmulde relativ zum Chassis führen zu oszillierenden Längsbewegungen der Kolbenstange KS relativ zum Zylinderrohr ZR ohne dass aber das Gewicht der Kippmulde über die Kolbenstange KS bzw. die Hydraulikzylinderanordnung abgestützt wäre.

Oszillierende Relativbewegungen zwischen Kolbenstange KS und Zylinderrohr ZR im Fahrbetrieb beanspruchen die Gleitführungen zwischen der Gleitfläche der Kolbenstangenanordnung und sowohl der Fluiddichtung FD als auch dem Abstreifer AS. Es zeigt sich, dass insbesondere im Bereich des Abstreifers hierdurch eine erhebliche mechanische Belastung der Gleitfläche auftritt. Die den zweiten Abschnitt GF2 der Gleitfläche bildende Außenfläche des Anbindungskörpers AK ist daher besonders verschleißfest ausgebildet und kann insbesondere durch Nitrieren gehärtet sein. Der erste Abschnitt GF1 der Gleitfläche steht im Fahrbetrieb nur mit Stützkörpern SK und der Fluiddichtung FD in Kontakt und ist dabei mechanisch weniger beansprucht als der mit dem Abstreifer AS in Kontakt stehende Bereich des zweiten Abschnitts GF2. Bei dem ersten Abschnitt GF1 der Gleitfläche ist dabei die mechanische Beanspruchung geringer und eine Härtung der Oberfläche der Kolbenstange KS ist nicht erforderlich.

Vorteilhafterweise kann durch die unterschiedliche Oberflächenbeschaffenheit des ersten Abschnitts GF1 und des zweiten Abschnitts GF2 der Gleitfläche eine Nachbehandlung, insbesondere Härtung der Gleitfläche auf den zweiten Abschnitt GF2 beschränkt werden und eine Härtung nur für den Anbindungskörper AK vorgenommen werden. Dessen Länge ist klein im Vergleich zur Länge der Kolbenstange KS, so dass beim Härtevorgang, welcher typischerweise in einer Kammer bei hoher Temperatur durchgeführt wird, eine weitaus größere Zahl von Anbindungskörpern AK gleichzeitig behandelt werden kann als eine geringere Anzahl von in demselben Kammervolumen anordenbaren vollständigen Kolbenstangen.

Bei Zuführen von unter hohem Druck stehendem Hydraulikfluid in die Fluidkammer der Hydraulikzylinderanordnung wird die Kolbenstange KS weiter aus dem Zylinderrohr ZR in axialer Richtung ausgeschoben. Dabei gleitet die Trennstelle TS über den Abstreifer AS in axialer Richtung hinweg und der erste Abschnitt GF1 der Gleitfläche kommt in Kontakt mit dem Abstreifer AS. Die dabei auftretende mechanische Belastung des ersten Abschnitts GF1 der Gleitfläche durch den Kontakt mit dem Abstreiferring ist aber wegen der im Vergleich zu den Schwingungen im Fahrbetrieb geringen und über die ganze Länge des ersten Abschnitts GF1 gleichmäßig verteilten Bewegung unproblematisch und erfordert keine gesonderte Behandlung des ersten Abschnitts GF1 der Gleitfläche mit dem Ziel einer Erhöhung der Verschleißfestigkeit.

Bei der gegenläufigen Bewegung zwischen Kolbenstange und Zylinderrohr ZR mit Einschieben der Kolbenstange KS in das Zylinderrohr ZR, beispielsweise beim Absenken einer Kippmulde aus einer angehobenen Position in eine abgesenkte Position, gleitet der erste Abschnitt GF1 an der Fluiddichtung FD und dem Abstreifer AS entlang, bis die Trennstelle TS den Abstreifer AS erreicht und dieser in dem kurzen restlichen Bewegungsabschnitt mit weiterem Einfahren der Kolbenstange KS in das Zylinderrohr ZR in Richtung des das Einschieben begrenzenden Anschlags der Abstreifer auf dem zweiten Abschnitt GF2 der Gleitfläche anliegt. Ein Einschieben der Kolbenstange KS in das Zylinderrohr ZR in axialer Richtung ist durch einen mechanischen Anschlag auf die in Fig. 1 skizzierte Position begrenzt, so dass die Trennstelle nicht über die Fluiddichtung FD hinweg bewegt werden kann und die Trennstelle daher auch die Fluiddichtung FD nicht mechanisch beanspruchen kann.

Fig. 2 zeigt die Anordnung nach Fig. 1 mit einer Position der Kolbenstange KS relativ zum Zylinderrohr ZR, in welcher die Trennstelle TS in axialer Richtung über den Abstreifer AS hinaus bewegt ist und der Abstreifer bereits an dem ersten Abschnitt GF1 der Gleitfläche anliegt.

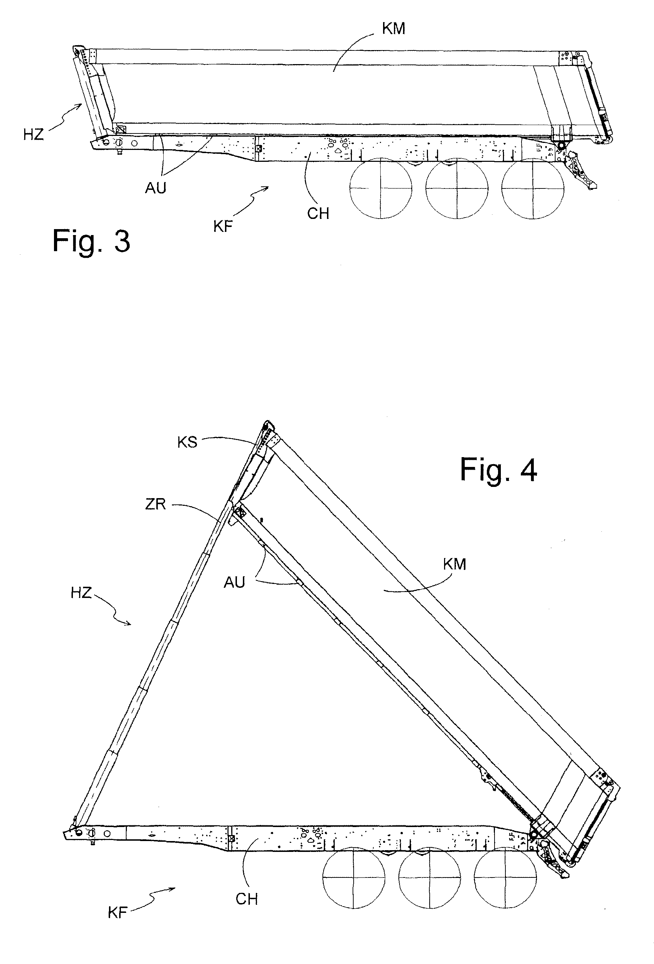

Fig. 3 zeigt in Seitenansicht als Sattelkipper, dargestellt ohne Zugfahrzeug, ein Kippmuldenfahrzeug KF mit einer Kippmulde KM, welche über eine in ihrem hinteren Bereich befindliche Kippachse KA durch Anheben des vorderen Bereichs der Kippmulde nach oben verschwenkbar ist, um Schüttgut über eine hintere Öffnung der Kippmulde aus dieser auszugeben. Eine Hydraulikzylinderanordnung HZ ist im Bereich des vorderen Endes der Kippmulde KM einerseits auf dem Fahrzeugchassis CH abgestützt und mit ihrem oberen Ende an die Kippmulde KM angebunden, wobei sowohl die Abstützung am Chassis als auch die Anbindung an die Kippmulde über eine Gelenkanordnung erfolgt. Die Kippmulde ist an in ihrem vorderen Bereich zwischen Kippmulde und Chassis ausgebildeten Auflagern AU, welche insbesondere elastisch dämpfendes Material enthalten können, abgestützt. In der vorzugsweise mehrstufigen Hydraulikzylinderanordnung sind Zwischenrohre zwischen einem am Chassis abgestützten äußeren Rohr und der an die Kippmulde angebundenen Kolbenstange bis zu einem unteren Anschlag in der Hydraulikzylinderanordnung abgesenkt, wogegen die Kolbenstange gegenüber einer unteren Anschlagposition innerhalb der Hydraulikzylinderanordnung um ein geringes Maß angehoben und schwimmend in dem die Kolbenstange unmittelbar umgebenden Zylinderrohr geführt ist. Die Kolbenstange macht dabei Schwingungen der Kippmulde in Form von oszillierenden Relativbewegungen innerhalb des Zylinderrohrs ZR mit.

Zum Anheben der Kippmulde wird Hydraulikfluid unter hohem Druck in den Fluidraum der Hydraulikzylinderanordnung eingeleitet und die einzelnen Stufen der Hydraulikzylinderanordnungen aus dem am Chassis abgestützten Außenrohr ausgefahren. Dabei kann die Kolbenstange KS in einer Zwischenstellung der Hydraulikzylinderanordnung zwischen der Ruhestellung nach Fig. 3 und der vollständig ausgefahrenen Stellung nach Fig. 4 auch innerhalb des Zylinderrohres ZR weiter in dieses eintauchen bis zu einem das Eintauchen begrenzenden Anschlag, wobei aber die Trennstelle TS in dem axialen Abschnitt zwischen Fluiddichtung FD und Abstreifer AS verbleibt und insbesondere nicht über die Fluiddichtung FD hinweg gleitet.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

## Patentansprüche

1. Hydraulikzylinderanordnung mit einer in einem Zylinderrohr längsverschiebbar geführten Kolbenstange, welche an ihrem über das Zylinderrohrende hinausragenden freien Ende eine Anbindungsanordnung zur Anbindung an ein Objekt aufweist, und mit einem im Bereich des Zylinderrohrendes an der Innenfläche des Zylinderrohrs angeordneten Abstreifer und einer gegenüber diesem vom Zylinderrohrende weiter beabstandeten Fluiddichtung, und mit einer Gleitfläche an der Kolbenstange, an welcher Abstreifring und Fluiddichtung bei der Längsverschiebung der Kolbenstange relativ zum Zylinderrohr entlang gleiten, **dadurch gekennzeichnet, dass** auf dem Zylinderrohrende ein Anbindungskörper befestigt ist und dass die Gleitfläche in einem ersten axialen Abschnitt durch eine Außenfläche der Kolbenstange und in einem zweiten axialen Abschnitt durch eine die Außenfläche der Kolbenstange axial fortsetzende Außenfläche des Anbindungskörpers gebildet ist, wobei in vollständig eingefahrenem Zustand der Kolbenstange eine axiale Trennstelle der Gleitfläche zwischen der Zylinderrohraußenfläche gegen Außenflächen des Anbindungskörpers axial zwischen Abstreifer und Fluiddichtung liegt und beim Ausfahren der Kolbenstange axial über den Abstreifer gleitet, und dass der zweite Abschnitt der Gleitfläche auf dem Anbindungskörper eine andere Beschaffenheit besitzt als der erste Abschnitt der Gleitfläche auf der Kolbenstange.

2. Anordnung nach Anspruch 1, **dadurch gekennzeichnet, dass** die einen Teil der Gleitfläche bildende Außenfläche des Anbindungskörpers gehärtet ist.

3. Anordnung nach Anspruch 2, **dadurch gekennzeichnet, dass** die Außenfläche des Anbindungskörpers nitriert ist.

4. Anordnung nach einem der Ansprüche 1 bis 3, **dadurch gekennzeichnet, dass** die Außenfläche des Anbindungskörpers korrosionsschützend behandelt ist.

5. Anordnung nach einem der Ansprüche 1 bis 4, **dadurch gekennzeichnet, dass** die Kolbenstange durch ein Rohr gebildet ist.

6. Anordnung nach einem der Ansprüche 1 bis 5, **dadurch gekennzeichnet, dass** der Anbindungskörper mit der Kolbenstange in Richtung der Zylinderachse verschraubt ist.

7. Anordnung nach Anspruch 6, **dadurch gekennzeichnet, dass** die Kolbenstange ein Innengewinde aufweist.

8. Anordnung nach einem der Ansprüche 1 bis 7, **dadurch gekennzeichnet, dass** in einem Ruhezustand ohne Einwirkung von unter Druck stehendem Hydraulikfluid die Kolbenstange nicht vollständig in das Zylinderrohr eingefahren ist.

9. Anordnung nach einem der Ansprüche 1 bis 8, **gekennzeichnet durch** ihre Anordnung zwischen einem Chassis eines Kippmuldenfahrzeugs und einer auf diesem kippbar gehaltenen Kippmulde.

10. Kippmuldenfahrzeug mit einer Hydraulikzylinderanordnung nach einem der Ansprüche 1 bis 9, wobei die Hydraulikzylinderanordnung als Hubeinrichtung zwischen dem Fahrzeugchassis und einer um eine Schwenkachse kippbar gelagerten Kippmulde angeordnet ist.
